# EUROPEAN PATENT APPLICATION

(11) **EP 4 790 864 A1**
(43) Date of publication of application: **12.08.2026**
(21) Application number: 25816893.9
(22) Date of filing: 10.09.2025
(51) Int. Cl.: H02J 3/12, H02J 3/48

(54) **CONTROL METHOD AND APPARATUS FOR VIRTUAL SYNCHRONOUS GENERATOR, AND GRID-FORMING INVERTER**

(30) Priority: 12.12.2024 CN 202411831484
(71) Applicant: Xiamen Kehua Digital Energy Tech Co., Ltd., Xiamen, Fujian 361100 (CN)
(72) Inventor: ZHANG, Yuting, Xiamen, Fujian 361000 (CN); YI, Longqiang, Xiamen, Fujian 361000 (CN); LI, Jie, Xiamen, Fujian 361000 (CN)
(74) Representative: Regimbeau
(86) International application number: PCT/CN2025/120356
(87) International publication number: WO 2026/123840

(57) **Abstract**

The embodiments of the application disclose a method and device for controlling a virtual synchronous generator, and a grid-forming inverter, which are disposed in the technical field of electrical control. In the embodiments of the application, a damping gain coefficient of the virtual synchronous generator during a transient fluctuation is acquired. A damping coefficient of an active power loop in the virtual synchronous generator is adjusted based on the damping gain coefficient to obtain a transient damping coefficient after gain adjustment. When the virtual synchronous generator is in a steady state and a grid frequency changes, a change of an active power in the active power loop is suppressed based on the transient damping coefficient. That is, the transient damping coefficient can ensure that when there is only a steady-state frequency change in the grid frequency, the active power is controlled not to change, i.e., no firm frequency response is performed, so as to decouple the damping coefficient in the active power loop and the firm frequency response coefficient, thereby ensuring the accuracy of the firm frequency response of the virtual synchronous generator.

## Description

### CROSS-REFERENCE TO RELATED APPLICATIONS

The present application is based on and claims priority to Chinese patent application No. 2024118314844 filed on December 12, 2024 and entitled "METHOD AND DEVICE FOR CONTROLLING VIRTUAL SYNCHRONOUS GENERATOR AND GRID-FORMING INVERTER", the content of which is hereby incorporated by reference in its entirety.

### TECHNICAL FIELD

The embodiments of the present disclosure relate to the technical field of electrical control, and particularly relate to a method and device for controlling a virtual synchronous generator, and a grid-forming inverter.

### BACKGROUND

With the application of distributed renewable energy systems, an increasing number of inverters are connected into the power grid, resulting in a significant reduction in the total damping and total inertia provided by traditional generators in the power grid. As a result, when the power grid encounters disturbances, a rate of frequency change accelerates, and an anti-interference capability deteriorates. In order to solve the problem, the concept of a virtual synchronous generator (VSG) control technology has been proposed. The control technology can imitate an operating mechanism of a synchronous generator, and suppress fluctuations in frequency and output power, so that a grid-forming inverter corresponding to the virtual synchronous generator has characteristics of power grid support, inertia response and damping, thereby mitigating power grid voltage amplitude and frequency fluctuations.

At present, a second-order excitation swing equation is adopted in the virtual synchronous generator, and when the corresponding virtual synchronous generator performs firm frequency response in an active power loop, a damping coefficient in the active power loop is coupled with a firm frequency response coefficient, which affects the accuracy of the firm frequency response of the virtual synchronous generator.

### SUMMARY

The embodiments of the present disclosure provide a method and device for controlling a virtual synchronous generator, and a grid-forming inverter, which can decouple a damping coefficient in an active power loop and a firm frequency response coefficient to ensure accuracy of firm frequency response of the virtual synchronous generator.

An embodiment of the present disclosure provides a method for controlling a virtual synchronous generator, which includes the following operations.

A damping gain coefficient of the virtual synchronous generator during a transient fluctuation is acquired.

A damping coefficient of an active power loop in the virtual synchronous generator is adjusted based on the damping gain coefficient to obtain a transient damping coefficient after gain adjustment.

When the virtual synchronous generator is in a steady state and a grid frequency changes, a change of an active power in the active power loop is suppressed based on the transient damping coefficient.

Further, acquiring the damping gain coefficient of the virtual synchronous generator during the transient fluctuation includes the following operation.

The damping gain coefficient of the virtual synchronous generator during the transient fluctuation is determined based on an attenuation time constant of a virtual winding in the virtual synchronous generator.

Further, acquiring the damping gain coefficient of the virtual synchronous generator during the transient fluctuation further includes the following operations.

A cut-off frequency of damping attenuation is acquired.

A gain value of the damping gain coefficient of the virtual synchronous generator during the transient fluctuation is determined based on the cut-off frequency.

Further, adjusting the damping coefficient of the active power loop in the virtual synchronous generator based on the damping gain coefficient to obtain the transient damping coefficient after the gain adjustment includes the following operation.

The damping gain coefficient is multiplied by the damping coefficient of the active power loop in the virtual synchronous generator to obtain the transient damping coefficient after the gain adjustment.

Further, the method further includes the following operations.

A frequency difference between a grid angular frequency and a rated angular frequency of the virtual synchronous generator is acquired.

When the frequency difference is not zero, it is determined that the grid frequency has changed.

When the frequency difference is zero, it is determined that the grid frequency has not changed.

Further, suppressing the change of the active power in the active power loop based on the transient damping coefficient includes the following operation.

A damping power in the virtual synchronous generator is controlled to be zero based on the transient damping coefficient to suppress the change of the active power in the active power loop.

Further, suppressing the change of the active power in the active power loop based on the transient damping coefficient includes the following operation.

The active power in the active power loop after the grid frequency changes is controlled to be consistent with a given active power of the virtual synchronous generator based on the transient damping coefficient in a transfer function between the active power and the grid frequency.

An embodiment of the present disclosure further provides a device for controlling a virtual synchronous generator, which includes an acquisition unit, an adjustment unit, and a suppression unit.

The acquisition unit is configured to acquire a damping gain coefficient of the virtual synchronous generator during a transient fluctuation.

The adjustment unit is configured to adjust a damping coefficient of an active power loop in the virtual synchronous generator based on the damping gain coefficient to obtain a transient damping coefficient after the gain adjustment.

The suppression unit is configured to suppress a change of an active power in the active power loop based on the transient damping coefficient when the virtual synchronous generator is in a steady state and a grid frequency corresponding to the virtual synchronous generator changes.

An embodiment of the present disclosure further provides a device for controlling a virtual synchronous generator, which includes:
a central processing unit, a memory, an input-output interface, a wired or wireless network interface, and a power supply.

The memory is a temporary storage memory or a persistent storage memory.

The central processing unit is configured to communicate with the memory and execute instructions stored in the memory on a control plane function entity to perform the method described above.

An embodiment of the present disclosure further provides a grid-forming inverter. When the grid-forming inverter is in a grid-connected state, the grid-forming inverter is controlled by using a virtual synchronous generator obtained by the method for controlling the virtual synchronous generator described above.

As can be seen from the above technical solutions, the embodiments of the present disclosure have the following advantages.

In the embodiments of the present disclosure, a damping gain coefficient of the virtual synchronous generator during a transient fluctuation is acquired. A damping coefficient of an active power loop in the virtual synchronous generator is adjusted based on the damping gain coefficient to obtain a transient damping coefficient after gain adjustment. When the virtual synchronous generator is in a steady state and a grid frequency changes, a change of an active power in the active power loop is suppressed based on the transient damping coefficient. That is, the transient damping coefficient can ensure that when there is only a steady-state frequency difference in the grid frequency (i.e., when there is only a steady-state change of the grid frequency), the active power is controlled not to change (i.e., no firm frequency response is performed), so as to decouple the damping coefficient in the active power loop and the firm frequency response coefficient, thereby ensuring the accuracy of the firm frequency response of the virtual synchronous generator.

### BRIEF DESCRIPTION OF THE DRAWINGS

To describe the technical solutions in the embodiments of the present disclosure described herein more clearly, the following briefly describes the accompanying drawings for describing the embodiments. It is apparent that the accompanying drawings in the following descriptions show some embodiments, and a person of ordinary skill in the art may derive other drawings from these accompanying drawings.
FIG. 1 is a control block diagram of rotor motion in an active power loop according to an embodiment of the present disclosure.
FIG. 2 is a control block diagram of firm frequency response in an active power loop according to an embodiment of the present disclosure.
FIG. 3 is a control flowchart of a virtual synchronous generator according to an embodiment of the present disclosure.
FIG. 4 is a control block diagram of rotor motion based on a transient damping coefficient according to an embodiment of the present disclosure.
FIG. 5 is a control block diagram of firm frequency response based on a transient damping coefficient according to an embodiment of the present disclosure.
FIG. 6 is a response diagram of an existing virtual synchronous generator when a grid frequency drops according to an embodiment of the present disclosure.
FIG. 7 is a response diagram of a virtual synchronous generator when a grid frequency drops according to an embodiment of the present disclosure.
FIG. 8 is a response diagram of an existing virtual synchronous generator when a grid frequency rises according to an embodiment of the present disclosure.
FIG. 9 is a response diagram of a virtual synchronous generator when a grid frequency rises according to an embodiment of the present disclosure.
FIG. 10 is a response diagram of superimposed firm frequency response according to an embodiment of the present disclosure.
FIG. 11 is a diagram of a device for controlling a virtual synchronous generator according to an embodiment of the present disclosure.
FIG. 12 is a diagram of a device for controlling another virtual synchronous generator according to an embodiment of the present disclosure.

### DETAILED DESCRIPTION

To make a person skilled in the art can understand the technical solutions in the present disclosure better, the following clearly describes the technical solutions in the embodiments of the present disclosure with reference to the accompanying drawings in the embodiments of the present disclosure. It is clear that the described embodiments are merely some rather than all of embodiments of the present disclosure. All other embodiments obtained by a person of ordinary skill in the art based on the embodiments of the present disclosure without creative efforts shall fall within the protection scope of the present disclosure.

In descriptions of the embodiments of the present disclosure, it is to be noted that orientation or location relationships indicated by terms "center", "above", "below", "left", "right", "vertical", "horizontal", "inner", "outer", and the like are orientation or location relationships based on the accompanying drawings, and are merely intended for conveniently describing the embodiments of the present disclosure, and simplifying descriptions, rather than indicating or implying that a device or an element in question needs to have a specific orientation or needs to be constructed and operated in a specific orientation, and therefore cannot be construed as a limitation on the embodiments of the present disclosure.

In descriptions of the embodiments of the present disclosure, it is to be noted that unless otherwise expressly specified and limited, terms "mount", "interconnect", and "connect" should be understood in a broad sense. For example, the terms may indicate a fixed connection, a detachable connection, or an integral connection; may be a mechanical connection or an electrical connection; or may be direct interconnection, indirect interconnection through an intermediate medium, or communication between the interior of two elements. For a person of ordinary skill in the art, a specific meaning of the foregoing terms in the embodiments of the present disclosure may be understood according to a specific situation.

A virtual synchronous generator (VSG) control technology controls a grid-forming inverter by imitating an operation mechanism of a synchronous generator. At present, a second-order excitation swing equation of the synchronous generator (i.e., a second-order classical model of the synchronous generator) used in the virtual synchronous generator includes a rotor motion equation reflecting a mechanical characteristic of the synchronous generator; and the rotor motion equation reflecting the mechanical characteristic is: $J \frac{dω}{dt} = {T}_{m} - {T}_{e} - D Δ ω$

Where *J* is a inertia constant, *Tₘ* is a mechanical torque, *Tₑ* is an electromagnetic torque, *D* is a damping torque coefficient, *ω* is a grid angular frequency, Δ*ω = ω -ω*₀, Δ*ω* is an angular frequency difference, and *ω*₀ is a rated angular frequency of the synchronous generator (i.e., the rated angular frequency of the virtual synchronous generator).

A power form expression corresponding to the rotor motion equation is: ${Jω}_{0} \frac{dω}{dt} = {P}_{m} - {P}_{e} - {Dω}_{0} Δ ω$

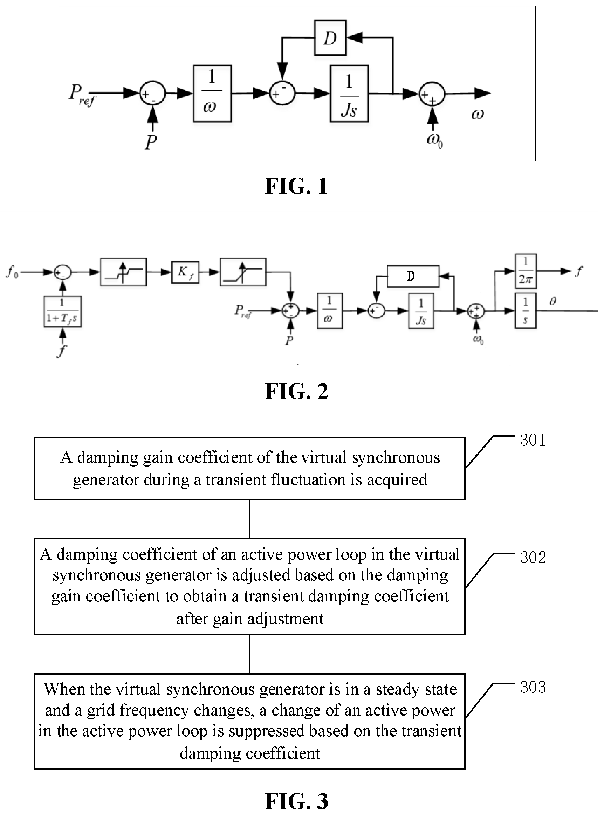

Where *Pₘ* is a rotor mechanical power, and *Pₑ* is an electromagnetic power. The rotor motion control in the corresponding virtual synchronous generator is illustrated in FIG. 1, where *P_{ref}* is a given active power of the virtual synchronous generator, which is equivalent to *Pₘ*; *P* is an actual active power output by the virtual synchronous generator, which is equivalent to *Pₑ*; *s* is a complex frequency in Laplace transform.

The virtual synchronous generator can perform firm frequency response in the active power loop (i.e., an active power of the virtual synchronous generator is adaptively adjusted with the change of an grid frequency), and the corresponding firm frequency response is illustrated in FIG. 2, where *T_{f}* is a first-order filtering time constant of an actual sampling frequency, and a transfer function between the active power and the grid frequency (i.e., a transfer function of an active-frequency characteristic) can be obtained as follows: $\frac{f - {f}_{n}}{{P}_{ref} - P} = \frac{1}{4 \cdot {π}^{2} \cdot {f}_{n} \left(Js+D\right)}$

Where *f* is a real-time grid frequency, *ω* = 2*πf*, *fₙ* is a rated frequency of the virtual synchronous generator (i.e., a rated grid frequency), *ω*₀ = 2*πfₙ*; when the virtual synchronous generator is in a steady state, the transfer function is: $\frac{f - {f}_{n}}{{P}_{ref} - P} = \frac{1}{4 \cdot {π}^{2} \cdot {f}_{n} \cdot D}$

When the grid frequency changes (i.e., when there is a difference between the grid frequency and the rated frequency of the virtual synchronous generator, that is, when the angular frequency difference *ω*₀ ≠ 0, a damping power of the virtual synchronous generator *P_{D}* = *Dω*₀Δ*ω ≠* 0), the transfer function is used for the firm frequency response.

The firm frequency response coefficient is defined as: ${K}_{f} = \frac{Δ P / {P}_{n}}{Δ f / {f}_{n}}$

Where Δ*P* = *P* - *P_{ref},* Δ*f = f - fₙ, Pₙ* is a rated active power of the virtual synchronous generator, and the firm frequency response coefficient may be obtained as: ${K}_{f} = 4 \cdot {π}^{2} \cdot {f}_{n} \cdot D \cdot \frac{{f}_{n}}{{P}_{n}}$

It can be seen that the firm frequency response coefficient is affected by a damping coefficient, that is, there is coupling between the damping coefficient of the virtual synchronous generator and the firm frequency response coefficient. Since the firm frequency response function needs to set a frequency dead band, when a frequency exceeds a range of the frequency dead band, it is necessary to deduct the active power corresponding to the part of the frequency dead band (i.e., there is a nonlinear control relationship between the active power and the frequency). The coupled damping coefficient affects the accuracy of the firm frequency response of the virtual synchronous generator. Therefore, an embodiment of the present application provides a method for controlling a virtual synchronous generator, which can decouple the damping coefficient in an active power loop and the firm frequency response coefficient to ensure the accuracy of the firm frequency response of the virtual synchronous generator. As illustrated in FIG. 3, the method specifically includes the following operations.

At 301, a damping gain coefficient of the virtual synchronous generator during a transient fluctuation is acquired.

In the embodiment of the present disclosure, the damping gain coefficient of the virtual synchronous generator during the transient fluctuation may be acquired. The virtual synchronous generator is used to control a grid-forming inverter, and the transient fluctuation of the virtual synchronous generator can be understood as a fluctuation occurring in the power grid of the grid-connected inverter or a fluctuation occurring in the load of the grid-connected inverter, which is not limited herein.

It can be understood that the damping of an existing synchronous generator includes mechanical damping, electromagnetic damping generated by a damping winding, damping provided by a power system static stabilizer (PSS), or the like. The mechanical damping is related to the relative rotational speed of the synchronous generator and is only manifested during a transient fluctuation process of the synchronous generator. The damping characteristic of the synchronous generator will have a certain gain (i.e., attenuation degree) during the transient fluctuation process. At this time, the damping characteristic of the synchronous generator during the transient fluctuation process may be simulated, and the damping characteristic of the active power loop in the virtual synchronous generator may be improved.

The damping gain coefficient with a transient damping characteristic may be obtained based on a damping attenuation characteristic in the transient fluctuation process. The damping gain coefficient *G_{d}*(*s*) of the virtual synchronous generator during the transient fluctuation may be determined based on a attenuation time constant of a virtual winding in the virtual synchronous generator, and the expression of the damping gain coefficient *G_{d}*(*s*) is as follows: ${G}_{d} \left(s\right) = \frac{{T}_{c} s}{{T}_{c} s + 1}$

Where *T_{c}* is the attenuation time constant of the virtual winding.

Further, a cut-off frequency of damping attenuation may be acquired, and the cut-off frequency is used to indicate that the damping is gain-enhanced between the cut-off frequencies and attenuated after the cut-off frequency. The cut-off frequency may be selected to be less than 1 Hz by combining the damping attenuation characteristic of the synchronous generator during the transient fluctuation and the amplitude-frequency characteristic in digital filtering. A gain value of the damping gain coefficient of the virtual synchronous generator during the transient fluctuation is determined based on the cut-off frequency. It can be understood that, in general, the higher the cut-off frequency, the higher the gain value of the corresponding damping gain coefficient, and the lower the cut-off frequency, the lower the gain value of the damping gain coefficient. When the cut-off frequency is less than 1 Hz, the gain value of the corresponding damping gain coefficient is less than -5dB, that is: $\left|{G}_{d}{\left(s\right)}_{ω = 2 \cdot π \cdot 0.1}\right| = \frac{0.2 {πT}_{c}}{\sqrt{1 + {\left(0.2{πT}_{c}\right)}^{2}}} = {10}^{- 5 / 20}$

The attenuation time constant T_{c} of the virtual winding may be obtained as 0.108.

At 302, a damping coefficient of an active power loop in the virtual synchronous generator is adjusted based on the damping gain coefficient to obtain a transient damping coefficient after gain adjustment.

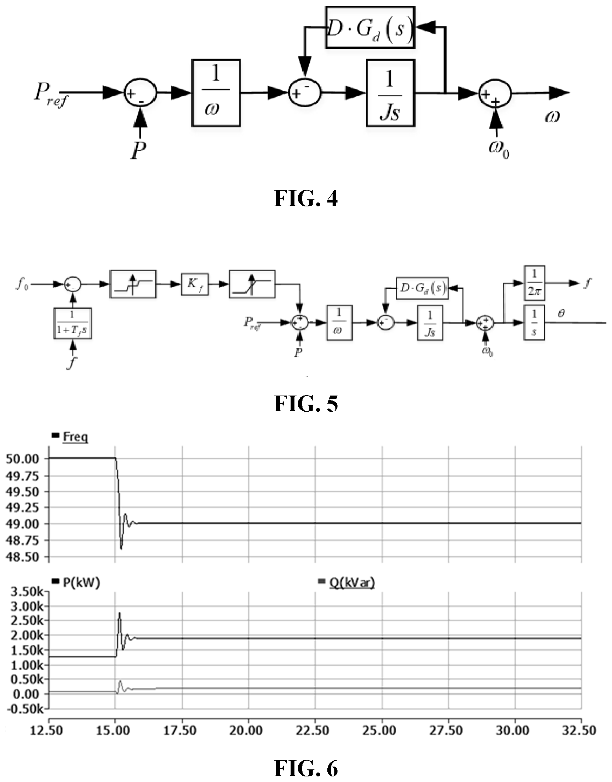

After the damping gain coefficient is acquired, the damping coefficient of the active power loop in the virtual synchronous generator may be adjusted based on the damping gain coefficient to obtain the transient damping coefficient after gain adjustment. Specifically, the damping gain coefficient may be multiplied by the damping coefficient of the active power loop in the virtual synchronous generator to obtain the transient damping coefficient after gain adjustment. As illustrated in FIG. 4, the damping coefficient *D* of the active power loop in the virtual synchronous generator is replaced with the transient damping coefficient *D*•*G_{d}*(*s*) after gain adjustment, and the virtual synchronous generator with the transient damping characteristic may be obtained.

At 303, when the virtual synchronous generator is in a steady state and a grid frequency changes, a change of an active power in the active power loop is suppressed based on the transient damping coefficient.

When the virtual synchronous generator is in the steady state and the grid frequency changes, the change of active power in the active power loop may be suppressed based on the transient damping coefficient. A frequency difference Δ*ω* between a grid angular frequency and a rated angular frequency of the virtual synchronous generator may be acquired. When the frequency difference Δ*ω* is not zero, it is determined that the grid frequency has changed. When the frequency difference Δ*ω* is zero, it is determined that the grid frequency has not changed.

That is, when the synchronous generator is in the steady state, the transient damping coefficient can realize band-pass filtering in the active power loop. When the grid frequency changes, the transient damping coefficient can suppress a change of the active power caused by an original damping coefficient in the steady state, that is, no firm frequency response is performed, so as to decouple the damping coefficient and the firm frequency response coefficient. That is, aiming at a coupling relationship between the firm frequency response coefficient and the damping coefficient in an existing virtual synchronous generator, a virtual transient damping coefficient is introduced into the existing virtual synchronous generator according to the transient characteristic and steady state characteristic of the damping winding in the synchronous generator. That is, a band-pass filtering processing is introduced to eliminate the influence of the damping coefficient on the firm frequency response in the steady state, and the decoupling between the damping coefficient and the firm frequency response coefficient in the virtual synchronous generator can be achieved.

It can be seen, in the embodiments of the present disclosure, a damping gain coefficient of the virtual synchronous generator during a transient fluctuation is acquired; a damping coefficient of an active power loop in the virtual synchronous generator is adjusted based on the damping gain coefficient to obtain a transient damping coefficient after gain adjustment; and when the virtual synchronous generator is in a steady state and a grid frequency changes, a change of an active power in the active power loop is suppressed based on the transient damping coefficient. That is, the transient damping coefficient can ensure that when there is only a steady-state change of the grid frequency, the active power is controlled not to change (i.e., no firm frequency response is performed), so as to decouple the damping coefficient in the active power loop and the firm frequency response coefficient, thereby ensuring the accuracy of the firm frequency response of the virtual synchronous generator.

Further, when the virtual synchronous generator is in a steady state and the grid frequency changes (i.e. Δ*ω* ≠ 0), a damping power in the virtual synchronous generator may be controlled to be zero based on the transient damping coefficient, so as to suppress the change of the active power in the active power loop. Specifically, in a steady state, the value of the damping power may be obtained according to final value theorem. The terminal value theorem is used when in the steady state, and calculates the time-domain behavior by directly taking the limit of a frequency-domain expression. That is, the corresponding damping power is: ${P}_{D 0} = {lim}_{s \to 0} {sP}_{D} \left(s\right) = {lim}_{s \to 0} s \frac{{DT}_{c} s}{{T}_{c} s + 1} \cdot Δ ω = 0$

At this time, the damping power is zero, that is, when there is only a steady-state change of the grid frequency, there is no active power change, and no firm frequency response is performed, that is, the decoupling between the damping coefficient and the firm frequency response coefficient is achieved.

Further, the control of the virtual synchronous generator with the transient damping coefficient is illustrated in FIG. 5. The active power in the active power loop can be controlled to be consistent with the given active power of the virtual synchronous generator after the grid frequency changes based on the transient damping coefficient in the transfer function between the active power and the grid frequency, so that the active power does not change. The transfer function between the active power and the grid frequency is: $\frac{f - {f}_{n}}{{P}_{ref} - P} = \frac{1}{4 \cdot {π}^{2} \cdot {f}_{n} \left(Js+D\cdot {G}_{d}\left(s\right)\right)}$

In the steady state, the following may be derived based on the final value theorem: ${lim}_{s \to 0} 4 \cdot {π}^{2} \cdot {f}_{n} \left(Js+D\cdot {G}_{d}\left(s\right)\right) = 0$

At this time, *P ≈ P_{ref}*, that is, the active power in the active power loop is consistent with the given active power of the virtual synchronous generator after the steady-state change of the grid frequency, without causing the change of the active power, and thus, achieving the decoupling between the damping coefficient and the firm frequency response.

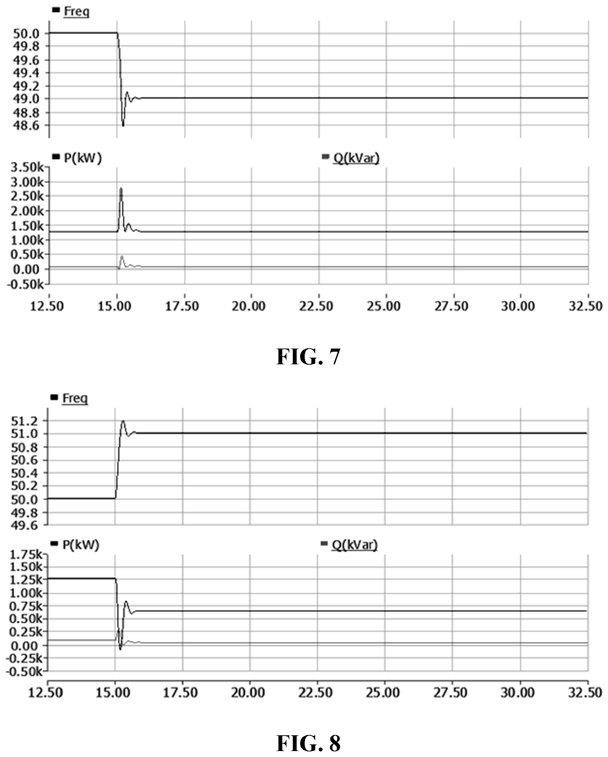

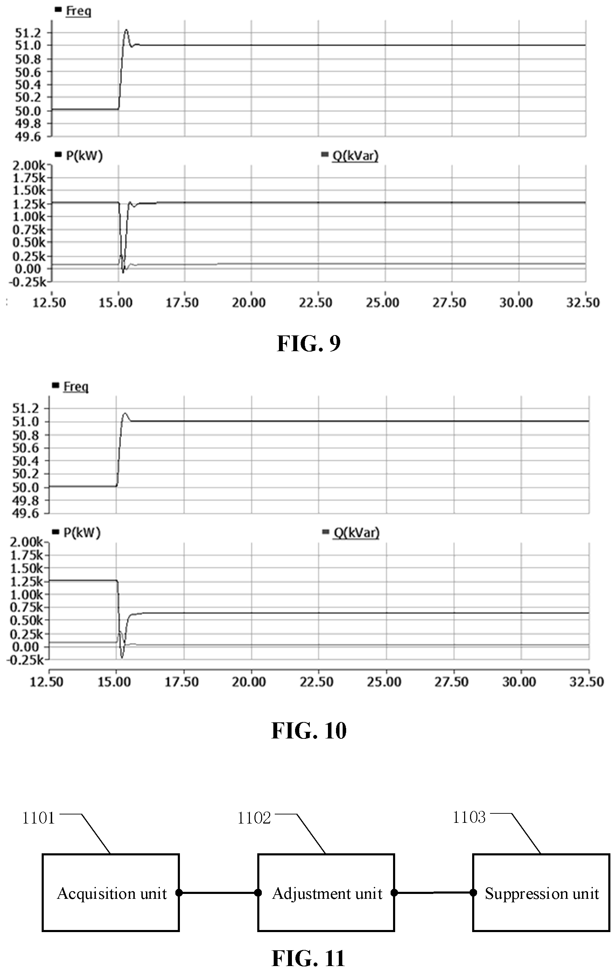

Further, in the embodiments of the present disclosure, the firm frequency response coefficient *K_{f}* may be set to 0, and the virtual synchronous generator with the transient damping characteristic and the traditional virtual synchronous generator without the transient damping characteristic may be configured with the same control parameter and operating condition (i.e., the power can be set to 1 Pₙ and the rated active power Pₙ = 1250K), and then the response diagrams of the two types of virtual synchronous generators to the change of the grid frequency (i.e., frequency step) may be analyzed. For example, the response of the traditional virtual synchronous generator is illustrated in FIG. 6. In FIG. 6, "Freq" represents the grid frequency, "P" represents the active power of the virtual synchronous generator, and "Q" represents the reactive power of the virtual synchronous generator. The grid frequency steps down from 50Hz to 49Hz at 15s, and the active power changes. The response of the virtual synchronous generator with the transient damping characteristic is illustrated in FIG. 7, the grid frequency steps down from 50Hz to 49Hz at 15s, and the active power does not change. For example, the response of the traditional virtual synchronous generator is illustrated in FIG. 8, the grid frequency steps up from 50Hz to 51Hz at 15s, and the active power changes. The response of the virtual synchronous generator with the transient damping characteristic is illustrated in FIG. 9, the grid frequency steps up from 50Hz to 51Hz at 15s, and the active power does not change. Correspondingly, if the virtual synchronous generator with the transient damping characteristic is superimposed on the firm frequency response, as illustrated in FIG. 10, the grid frequency steps up from 50Hz to 51Hz at 15s. It can be seen that in the embodiments of the present disclosure, the virtual synchronous generator with the transient damping characteristic can achieve decoupling between the damping coefficient and the firm frequency response.

An embodiment of the present disclosure further provides a device for controlling a virtual synchronous generator, as illustrated in FIG. 11, the device includes an acquisition unit 1101, an adjustment unit 1102, and a suppression unit 1103.

The acquisition unit 1101 is configured to acquire a damping gain coefficient of the virtual synchronous generator during a transient fluctuation

The adjustment unit 1102 is configured to adjust a damping coefficient of an active power loop in the virtual synchronous generator based on the damping gain coefficient to obtain a transient damping coefficient after the gain adjustment.

The suppression unit 1103 is configured to suppress a change of an active power in the active power loop based on the transient damping coefficient when the virtual synchronous generator is in a steady state and a grid frequency corresponding to the virtual synchronous generator changes.

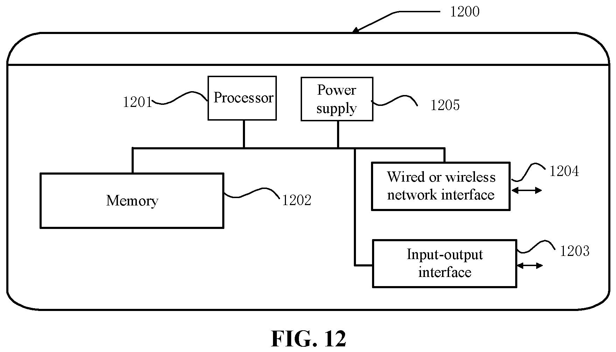

An embodiment of the present disclosure further provides a device for controlling a virtual synchronous generator. As illustrated in FIG. 12, the control device 1200 in the embodiment of the present disclosure may include one or more central processing units (CPUs) 1201 and a memory 1202, and one or more application programs or data are stored in the memory 1202.

The memory 1202 may be a volatile storage or a persistent storage (i.e., a nonvolatile memory). The program stored in the memory 1202 may include one or more modules, each module may include a series of instruction operations in an electronic device. Further, the central processor 1201 may be configured to communicate with the memory 1202, and a series of instruction operations in the memory 1202 are executed on the control device 1200.

The control device 1200 may further include one or more power supplies 1205, one or more wired or wireless network interfaces 1204, one or more input-output interfaces 1203, and/or one or more operating systems, such as Windows ServerTM, Mac OS XTM, UnixTM, LinuxTM, FreeBSDTM, etc.

The central processor 1201 may perform the operations of any of the specific method embodiments described above, and will not be described in detail.

An embodiment of the present disclosure further provides a grid-forming inverter. When the grid-forming inverter is in a grid-connected state, the grid-forming inverter is controlled by using a virtual synchronous generator obtained by the method for controlling the virtual synchronous generator described above.

An embodiment of the present disclosure further provides a computer-readable storage medium. The computer-readable storage medium includes instructions, and when the instructions are run on a computer, the computer is caused to execute the method as described above.

It may be clearly understood by a person skilled in the art that, for the purpose of convenient and brief description, for a detailed operation process of the foregoing system, device, and unit, refer to a corresponding process in the foregoing method embodiments, and details are not described herein again.

In the several embodiments provided in the present disclosure, it should be understood that the disclosed system, device, and method may be implemented in other manners. For example, the described device embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on multiple network units. Some or all of the units may be selected based on actual requirements to achieve the objectives of the solutions of the embodiments.

In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present disclosure essentially, or the part contributing to the current technology, or all or some of the technical solutions may be implemented in the form of a software product. The computer software product is stored in a storage medium and includes several instructions for instructing a computer device (which may be a personal computer, a server, or a network device) to perform all or some of the operations of the methods described in the embodiments of the present disclosure. The foregoing storage medium includes any medium that may store program codes, such as a USB flash drive, a removable hard disk, a read-only memory (ROM), a random access memory (RAM), a magnetic disk, or an optical disc.

## Claims

1. A method for controlling a virtual synchronous generator, comprising:
acquiring a damping gain coefficient of the virtual synchronous generator during a transient fluctuation;
adjusting a damping coefficient of an active power loop in the virtual synchronous generator based on the damping gain coefficient to obtain a transient damping coefficient after gain adjustment; and
when the virtual synchronous generator is in a steady state and a grid frequency changes, suppressing a change of an active power in the active power loop based on the transient damping coefficient.

2. The method of claim 1, wherein acquiring the damping gain coefficient of the virtual synchronous generator during the transient fluctuation comprises:
determining the damping gain coefficient of the virtual synchronous generator during the transient fluctuation based on an attenuation time constant of a virtual winding in the virtual synchronous generator.

3. The method of claim 1, wherein acquiring the damping gain coefficient of the virtual synchronous generator during the transient fluctuation comprises:
acquiring a cut-off frequency of damping attenuation; and
determining a gain value of the damping gain coefficient of the virtual synchronous generator during the transient fluctuation based on the cut-off frequency.

4. The method of claim 1, wherein adjusting the damping coefficient of the active power loop in the virtual synchronous generator based on the damping gain coefficient to obtain the transient damping coefficient after the gain adjustment comprises:
multiplying the damping gain coefficient by the damping coefficient of the active power loop in the virtual synchronous generator to obtain the transient damping coefficient after the gain adjustment.

5. The method of claim 1, further comprising:
acquiring a frequency difference between a grid angular frequency and a rated angular frequency of the virtual synchronous generator;
when the frequency difference is not zero, determining that the grid frequency has changed;
when the frequency difference is zero, determining that the grid frequency has not changed.

6. The method of claim 1, wherein suppressing the change of the active power in the active power loop based on the transient damping coefficient comprises:
controlling a damping power in the virtual synchronous generator to be zero based on the transient damping coefficient to suppress the change of the active power in the active power loop.

7. The method of claim 1, wherein suppressing the change of the active power in the active power loop based on the transient damping coefficient comprises:
controlling, based on the transient damping coefficient in a transfer function between the active power and the grid frequency, the active power in the active power loop after the grid frequency changes to be consistent with a given active power of the virtual synchronous generator.

8. A device for controlling a virtual synchronous generator, comprising:
an acquisition unit, configured to acquire a damping gain coefficient of the virtual synchronous generator during a transient fluctuation;
an adjustment unit, configured to adjust a damping coefficient of an active power loop in the virtual synchronous generator based on the damping gain coefficient to obtain a transient damping coefficient after the gain adjustment; and
a suppression unit, configured to suppress a change of an active power in the active power loop based on the transient damping coefficient when the virtual synchronous generator is in a steady state and a grid frequency corresponding to the virtual synchronous generator changes.

9. A device for controlling a virtual synchronous generator, comprising:
a central processing unit, a memory, an input-output interface, a wired or wireless network interface, and a power supply, wherein
the memory is a temporary storage memory or a persistent storage memory; and
the central processing unit is configured to communicate with the memory and execute instructions stored in the memory on a control plane function entity to perform the method of any one of claims 1 to 7.

10. A grid-forming inverter, wherein when the grid-forming inverter is in a grid-connected state, the grid-forming inverter is controlled by using a virtual synchronous generator obtained by the method for controlling the virtual synchronous generator of any one of claims 1 to 7.
